# EUROPEAN PATENT APPLICATION

(11) **EP 2 165 597 A2**
(43) Date of publication of application: **24.03.2010**
(21) Application number: 09170795.0
(22) Date of filing: 21.09.2009
(51) Int. Cl.: A01G 31/00, A01G 9/10

(54) **Means of cultivation and method for the germination of seeds and development of stolons and seedlings**

(30) Priority: 22.09.2008 IT MI20081679
(71) Applicant: FAT - Fattoria Autonoma Tabacchi Scarl, 06012 Citta' Di Castello (PG) (IT)
(72) Inventor: Bargiacchi, Enrica, 57016, Rosignano Marittimo (Livorno) (IT); Filippi, Marco, 06012, Città di Castello (Perugia) (IT); Miele, Sergio, 56123, Pisa (IT); Rossi, Fabio, 06024, Gubbio (Perugia) (IT)
(74) Representative: Coppo, Alessandro

(57) **Abstract**

The present invention refers, according to one aspect, to a cultivation means for the germination of seeds and the development of stolons and seedlings comprising a natural sub-layer, based on the association of: i) an organic component, selected from the group comprising peat, vegetable fibers, biodigest, composted conditioners, deoiled panels and mixtures thereof, with ii) an inorganic component based on a synergic association of clinoptilolite and cellular glass.

## Description

### FIELD OF THE INVENTION

The present invention relates to means of cultivation and method for the germination of seeds and development of stolons and seedlings.

In particular, the present invention relates to a means of cultivation and a method for the intensive production of light turf sods in a protected environment.

### BACKGROUND OF THE INVENTION

The present invention originates from the technical field concerning preparations and methodologies for the germination of seeds and development of vegetative parts of turf seedlings in a protected environment, such as tunnels, greenhouses or shading nets.

Up until now, the lawns have been produced directly in the place where the grass surfacing is to be developed or in a nursery. In this last case, the nursery man cultivates a lawn in open field, from which he takes "turfs" or "sods" or proper "rolls" of ready lawn, once grown up, which are subsequently transferred to the place, where the development of the lawny surfacing is desired to develop.

The production of lawn in a float system is also known, according to a technique described by Martini et al. in the Italian Patent Application MI2004A002318 of 02.12.2004.

This technique frees the production of the lawns from the availability of sandy soils and from the seasonality and makes each single production cycle more rapid, thus avoiding expensive programming in a great advance, with respect to the real availability of the mature product. However, this productive modality has shown over time a whole series of problems, in particular:
- it requires the use of a polyurethane-based polymer, which is not only expensive, but must also be handled within a chemical plant and presents problems of a slow biodegradability after having been planted, so it does not allow the immediate usability for the main sport purposes;
- it is necessary to use polystyrene panels to allow the single turf sods to float, which is not only expensive, but over time it presents also disposal problems;
- it requires a considerable use of labor for preparing turfs, sow them and place them each on its own polystyrene panel;
- in some cases, with growing media thinner than 10 mm, growth difficulties are observed in the turfs central area.
   The invention described afterwards allows the previously exposed problems to be overcome or at least remarkably mitigated.

### SUMMARY OF THE INVENTION

One of the main objects of the invention is to provide a cultivation means for the production of lawns in a protected environment, which does not require the use of considerable quantities of polyurethane (typically ≥10% of the total weight) or floating polystyrene panels.

Another object of the present invention is to propose a method for producing a lawn in turfs, ready to be planted in much less time with respect to the same production carried out in a traditional way.

A further object of the invention is to obtain a high quality lawn also in the form of turf sods or rolls, which are particularly light and easy to lay.

In view of these objects, there is provided, according to a first aspect of the invention, a cultivation means for the germination of seeds and development of the stolons and seedlings, as defined in the enclosed claim 1.

Further characteristics of the cultivation means according to an aspect of the invention are pointed out in the dependent claims 2-6.

It has been found that it is possible to increase the speed of the seeds germination and the stolons and seedlings growth using a growing medium of natural origin, in which an organic component is mixed with a specific inorganic component.

In particular, as far as the inorganic component is concerned, it has been found that by associating two selected siliceous matrix components, such as cellular glass and clinoptilolite, a synergistic effect is surprisingly obtained, that determines an increase of the speed of seeds germination and of the stolons and seedlings development. This synergistic effect on the speed of the seedlings growth, particularly evident in the case of lawns, is not found on the conventional cultivation means/growing media, even if they incorporate expanded (foamed) glass pellets.

### DETAILED DESCRIPTION OF THE INVENTION

Advantageously, the cellular glass used in the scope of the invention is characterized by the presence of closed cells or pores that do not allow an internal capillarity. Just for this reason, the cellular glass usable in the scope of the invention finds application in other technical fields, as insulating material, usable for example in building construction, since it is frost-resistant due to the fact that it does non absorb water.

In a different way, the conventional type growing media that use expanded glass, typically in the form of pellet, present a plurality of pores interconnected through the same pellets. In this way, the seedlings roots extend through the interconnected pores allowing the water movement and infiltration by capillarity. This phenomenon does not occur when closed cells/pores cellular glass is used, according to an aspect of the invention.

The two components, organic and inorganic, of the sub-layer of the invention are chosen so as to allow an easy removal and laying of once matured turfs/sods/rolls, due to the their light-weight (weight/M²).

Typically, the cultivation means of the invention uses fundamentally growing medium based on natural and/or biodegradable components, which makes it possible to produce a very light lawn in short time. Specifically, in the growing medium of the invention, the organic component has a nutritive and structuring function of retaining water and possible added fertilizing solutions, whereas in the inorganic component the glass improves the internal drainage and the clinoptilolite represents a long term reserve of ammoniacal nitrogen, potassium and iron. The association of these two specific inorganic components determines a quite unexpected increase of the lawn growth speed, allowing to reduce its weight due to the presence of the cellular glass, whose density is typically lower than 200 kg/m³.

Moreover, the cellular glass component acts as a temperature buffer in the means of growth of the invention, that contributes to improve the root growth in the same means and to increase the development of the aerial apparatus. All these aspects contribute to reduce the time necessary to produce a mature grass sod ready to be marketed.

According to an embodiment of the invention, the organic component of the growing medium can be peat, or in a subordinate way, a stabilized organic material such as green, peaty and/or mixed composted amendment or belt-pressed biodigest, or vegetal fibers, barks, deoiled cakes and mixtures thereof.

The term "biodigest" means the effluent material of the anaerobic digestion process of the organic substance, carried out to produce biogas to be burnt in the cogeneration plants; such material comprises mineral salts and the organic substance, which is not biodigested (mostly lignin).

Vegetal fibers are meant to comprise, among others, the fibers and fibrils of cotton, hemp, kenaf, coconut, palm, obtained also from recycling of exhausted textiles.

The deoiled cakes useful for the invention originate from the extruded phase or from the oilseed cake, subjected to the processes of mechanical or chemical oil extraction. The usable deoiled cakes are, among others, those of sunflower, soybean, colza, Jatropha curcas, palm, coconut.

Typically, the clinoptilolite used in the scope of the invention has the composition formula CaNa₂A1₂Si₇O_{18.}6H₂O and presents high affinity of ionic adsorption of ammonium, potassium and sodium.

The clinoptilolite can be used as it is or in mixture, in various proportions, with other inorganic components such as, for example, cellular glass. The latter is obtained from the recycled glass, subjected to a cycle of high temperature and cooling, so as to get fibrous structure and apparent density typically lower than 200 kg/m³.

The choice of the mixing proportions between these two materials depends on the type of lawn and on the environment conditions, in which it will develop after being planted.

Typical mixing proportions are preferably comprised between 1 and 99% by weight for the clinoptilolite and 99-1% for the cellular glass, and more preferably are in the range of 40-70% for the clinoptilolite and 60-30% for the cellular glass.

According to another embodiment, the cultivation means of the invention can also have a binding and fertilizing polymer in its composition.

The term binding and fertilizing polymer means a polymeric or copolymeric material, having both binding properties for combining the various components of the same cultivation means and fertilizing properties that help the growth of the vegetative components of the propagated or sowed seedlings. Typically, said polymeric material acts as an aggregating agent against the other components and acts also as a slow nitrogen release fertilizer, by means of the natural mineralization process. In this way, after having been planted, the obtained seedlings require a limited supply of nitrogen.

According to an embodiment, the binding and fertilizing polymer used in the scope of the invention is biodegradable.

A particularly suitable binding and fertilizing polymer includes a polymer of urea-formaldehyde. The urea-formaldehyde has actually demonstrated to be a polymer that acts both as a fertilizer, due to the presence of nitrogen and to the capacity of its slow release into the environment, and as a binding agent towards the other components of the cultivation means.

According to an embodiment, the components of the cultivation means can be distributed on a suitable support, made of vegetable material and having different types of shape, for example elongated, in sheet or in strips.

According to an embodiment, the support includes one or more layers of vegetable material, preferably chosen from the group consisting of jute or analogous material, such as kenaf, hemp, cotton, Miscanthus, coconut. Otherwise, the support can be made of felt, for example obtained from the wastes of the same materials differently aggregated, for example in the form of strips of variable thickness and length.

According to an embodiment of the invention, the cultivation means is substantially without polyurethane. This constitutes an advantage both in terms of reduction of production costs and of biodegradability. According to an aspect of the invention, a cultivation means is obtained for the development of seedlings, in particular for the production of lawns according to the invention, by distribution, on a thin layer of vegetable material, organized, for example, in matting or felt, of natural matrixes, organic and inorganic, in different quantities and proportions, depending on the realization type, and then the seeds or the stolons of the lawn species. Afterwards, a binding and fertilizing polymer is distributed. The resultant cultivation means has porosity and lightness characteristics suitable for the development of a lawn, which, once matured, will be light and flexible.

According to an embodiment, such a cultivation means has 20-40% of the total quantity of water; 79-50% of natural matrix, both organic (this fraction inclusive of vegetable material organized in matting or felt) and inorganic; and preferably 1-10% of a urea-formaldehyde polymer.

Typically, in the formulation of the cultivation means of the invention there can be present one or more mineral components, such as, for example: mineral wool, pozzolana, pumice, vermiculite, perlite, expanded clay, bentonite, zeolites and mixtures thereof in proportions, typically, equal to 0,1-10% of the total quantity.

According to another embodiment of the invention, in the formulation of the cultivation means there can be present one or more of the following substances: fertilizers, wetting agents, plant protection products, pH and salinity correctives, strains of plant protective and nutrition adjuvant microorganisms (among which, for example: Trichoderma viridis, Azospirillum brasilense, Rhizobium spp., Mycorrhizas, etc.).

According to another aspect of the invention, there is provided a method for the development of seedlings, and in particular for the intensive production of lawns, comprising the steps of:
- placing a support of vegetable material, preferably chosen from among jute, hemp, cotton, kenaf, Miscanthus, coconut, felt and combinations thereof,
- distributing an original growing medium on the support of vegetable material, in which said natural growing medium includes:
   i) an organic component chosen from the group consisting of peat, vegetable fibers, biodigest, composted amendment, deoiled cakes and mixtures thereof, and
   ii) an inorganic component chosen from the group consisting of clinoptilolite, cellular glass and mixtures thereof,
- sowing the natural growing medium with one or more seeds or stolons, and
- optionally, distributing an urea formaldehyde polymer on said natural growing medium.

All the above operations can be performed manually, but advantageously the method proposed by the invention overcomes the previous technique, since it can be completely mechanized, with advantages in terms of costs and operational times.

Typical turf species usable in the scope of the method of the invention comprise Festuca arundinacaea, Festuca rubra var rubra, Festuca rubra var. commutata, Festuca longifolia, Festuca ovina, Lolium perenne, Lolium multiflorum, Agrostis stolonifera, Agrostis tenuis, Dichondra repens, Poa pratensis, Poa trivialis, Poa annua, Cynodon dactylon, Stenotaphrum secundatum, Axonopus affinus, Eremochloa ophiuroides, Buchloe dactyloides and Pennisetum clandestinum, hybrids of Cynodon, Paspalum vaginatum, Paspalum notatum, Zoysia japonica, Zoysia tenuifolia, Zoysia matrella, Zoysia hybrids, and mixtures thereof, adopting for each one the most suitable planting system: in a gamic or agamic way.

In particular, the sexually and asexually propagated turf grass species develop on the cultivation means, comprising a growing medium of organic and inorganic component and a fertilizing and binding polymer, which is placed on a thin layer of vegetable material, organized in felt or matting.

Typically, the strips of cultivation means are arranged on plastic film, for example of polythene, where the lawn develops and remains up to commercial maturity. The cultivation method of the invention can be carried out in open environment as well as in closed or protected environment, for example in greenhouses of different types. For instance, besides tunnels covered with plastic film, also greenhouses with other types of covering (polycarbonate, etc.) can be used, while, in favorable growing periods, the lawn cultivations of the invention can be covered with shading or anti-hail nets, or even left without any covering, in the open air.

Advantageously, in the species that present this characteristic, as soon as the lawn seedlings have reached the height of 4-6 cm, the aerial apparatus is mowed, so as to stimulate tillering (production of lateral buds which thicken the grass surface).

Typically, the so treated lawn is ready to be commercialized 30-50 days after sowing. The sending to sale can be performed by simply rolling up the strips of lawn, or by stacking the subsequent sods.

According to another aspect, the present invention provides a lawn obtained with the previously described method.

This lawn is particularly suitable not only for all the typical uses of sod lawn, but also for preparing coverings of roofs/terraces, vertical walls, reviving of areas of moderate surface and difficult position, preparing fair stands, shop windows, production of gadgets and decorations for florists.

According to another embodiment, light turfs of lawn are provided, preferably preformed in strips and weighing less than 6 kg/m², once matured, after the loss of gravitational water (dripping).

The following examples are provided as a pure illustration of the present invention and are not to be intended as limiting the protective scope, which is defined by the enclosed claims.

### Example 1

A lawn of excellent quality and lightness (4.7 kg/m²) has been produced in 35 days, obtained by placing in a greenhouse (on an impermeable film of polythene) strips of jute 1 m wide and 8 m long, on which peat (500 g/m²) has been distributed in a mixture of 300 g/m² of an inorganic component, constituted by clinoptilolite and cellular glass in 50/50% by weight. Afterwards, 35 g/m² of seeds of a mixture of Lolium perenne and Festuca spp. have been sowed, and then a urea-formaldehyde polymer in liquid form, with nitrogen mass fraction of 28% (100 g/m²), has been distributed.

During the production cycle, 6 sprinkling irrigations have been made and a mowing has been made 25 days after the sowing, followed by a fertirrigation with the concentration of 0,3% of a formulation 18.10.18+2 MgO.

### Example 2

The same composite growing medium has been used in adjacent tunnels for producing high quality and lightness lawns of the following species with purity: Festuca rubra (20-30 gram/m²); Lolium perenne (40-60 gram/m²); Agrostis stolonifera (4-6 gram/m²); Cynodon dactylon (8-12 gram/m²); Dichondra repens (8-12 gram/m²), Poa pratensis (10-20 gram/m²). Following the technique indicated in the example 1, lawns of high quality and of weight lower than 5 kg/m² have been produced with Festuca, Lolium and Poa in 35-40 days; with Agrostis, Cynodon and Dichondra about 50 days were necessary to obtain mature lawns of the weight between 5.4 and 5.8 kg/m². With the latter species, 8, instead of 6, irrigations have been made and three fertirrigations with 18.10.18+2% of 0.3% MgO. With the exception of Dichondra, all the other species have been subjected to 1-2 cuts during the productive phase.

### Example 3

A lawn of excellent quality and lightness (5.3 kg/m²) has been produced in 40 days, obtained by placing in a greenhouse (on an impermeable film of polythene) strips of cotton gauze 1 m wide and 5 m long, on which a mixture of belt-pressed biodigest with 35% of humidity (500 g/m²) and an inorganic component, obtained by mixing clinoptilolite and cellular glass in proportion 20/80% by weight, have been distributed. Afterwards, 35 g/m² of seeds of a mixture of Lolium perenne and Festuca spp. have been sowed, and then a urea-formaldehyde polymer in liquid form, with nitrogen mass fraction of 28% (80 g/m²), has been distributed.

In the course of the seedlings development cycle, 10 irrigations and 3 fertirrigation treatments have been carried out with a water-soluble fertilizer 15.5.25+2% of 0.25% MgO. The lawn has also been mowed twice: 20 and 30 days after the sowing.

### Example 4

With the same growing medium described in the previous example, a high quality and lightness (less than 6 kg/m²) lawn has been produced in about 50 days, obtained from a species that propagate agamically, Paspalum vaginatum. The stolons (50-80 g/m²), then the growing medium of the example 3, and finally, the urea-formaldehyde based fertilizing polymer have been distributed on strips of cotton gauze, having dimensions of 1 m by 5 m, spread on a polythene film that constitutes the floor of a tunnel. 12 irrigations and 4 fertirrigations (the same formulation and concentration of the previous example), as well as 2 mowings have been carried out. Other rhizomatous species that are advantageously suitable for this type of use are also: Cynodon dactylon x transvaalensis and Zoysia japonica.

### Example 5

A comparison has been made from the work time point of view between the lawn production method proposed by the invention and another lawn production method in a greenhouse.

Using the cultivation means described in the example 1, a tunnel has been realized, having an effective surface of 200 m² of lawn.

The preparing operations (jute spreading, cultivation means scattering and sowing) have been carried out with the help of mechanical means and have required 6 hours of manpower, against 22 hours of the other lawn production method in a greenhouse.

The lawn organizing step has required as a whole, for the same tunnel, 11 hours of manpower, wholly comparable to the time required by the other lawn production method in a greenhouse.

It has taken 5 hours of manpower, against 30 hours of the other method, to pick up the lawn of the invention, once matured, and to pack it onto pallets to send it to its destination.

Then, the rolls of lawn of the invention have been laid on a flat and regular surface in 9 hours of manpower against the 26 hours of the other production method.

Further advantages have been obtained in shipping logistics (bulk of load reduced by about a half) and in the process wastes (less than 1/3 of polythene film for wrapping the pallets).

### Example 6

The samples 2, 3, 4 (reported in the Table from the top to the bottom) of the growing medium of the invention have been prepared and assayed experimentally as for their physical characteristics with respect to a sample of peat only (sample 1).
Sample 4 related to a growing medium with a minimum quantity of peat (15%) has proved particularly suitable for the growth of the lawn so-called cool season species, while sample 3, with the 40% of peat, has proved suitable most of all for the warm season species.

The presence of the cellular glass increases the product lightness degree, avoiding these shrinking problems (ratio between micro- and macroporosity, where the micropores represent the soil capacity for water and the macropores the soil capacity for air), caused by the moistening/drying cycles, typical for the growing media based on peat only.

Even though the sub-layer of sample 1, based on peat only, has an appreciable initial agronomic response, it brings about a bigger tendency to cause phytopathology problems in short time.

| PEAT | CLINOP. | CELL. GLASS | ACTUAL DENSITY g/Kg | APP. DENSITY g/l | POROSITY % vol | WATER Pf1% vol. | AIR Pf1% vol. | SHRINKAGE DEGREE % vol. |
|---|---|---|---|---|---|---|---|---|
| 100 | 0 | 0 | 1515 | 141 | 90.3 | 71.6 | 18.8 | 25.6 |
| 65 | 25 | 10 | 2009 | 377 | 72.3 | 63.7 | 14.4 | 7.5 |
| 40 | 40 | 20 | 1934 | 563 | 70.0 | 61.6 | 13.9 | 6.3 |
| 15 | 55 | 30 | 1843 | 763 | 61.2 | 59.7 | 12.5 | 6.1 |

## Claims

1. A cultivation means for the germination of seeds and the development of stolons and seedlings comprising a natural growing medium, based on
i) an organic component comprising one or more components selected from peat, vegetable fibers, biodigest, composted amendment, deoiled cakes and mixtures thereof, and
ii) an inorganic component comprising clinoptilolite and cellular glass.

2. A cultivation means as claimed in claim 1, **characterized in that** said cellular glass is closed cell cellular glass.

3. A cultivation means as claimed in claim 1 or 2, **characterized by** further including a binding and fertilizing polymer, preferably of urea-formaldehyde.

4. A cultivation means according to any one of the claims 1-3, **characterized in that** said natural growing medium is placed on a support, preferably of vegetable material.

5. A cultivation means as claimed in claim 4, **characterized in that** said support of vegetable material includes at least one layer selected from jute, hemp, cotton, kenaf, Miscanthus, coconut, felt and combinations thereof.

6. A cultivation means as claimed in any one of the claims 1-5, **characterized by** the fact of consisting substantially of:
- an original growing medium based on the association of
a) an organic component chosen from the group consisting of peat, vegetable fibers, biodigest, a composted amendment, deoiled cakes and mixtures thereof,
b) an inorganic component that consists substantially in clinoptilolite and cellular glass,
- a binding and fertilizing polymer, preferably consisting of an urea-formaldehyde polymer.

7. Use of a cultivation means as claimed in any one of the claims 1-6, for the germination of seeds and the development of stolons and seedlings.

8. Use as claimed in claim 7, for the intensive production of a lawn.

9. A method for the intensive production of lawn comprising:
- placing of a support of vegetable material,
- distributing an original growing medium on the support of vegetable material, in which said natural growing medium includes:
i) an organic component selected from the group consisting of peat, vegetable fibers, biodigest, a composted amendment, deoiled cakes and mixtures thereof, and
ii) an inorganic component comprising clinoptilolite mixed with cellular glass,
- sowing the natural growing medium with one or more seeds or stolons, and
- optionally, distributing an urea formaldehyde polymer on said vegetable growing medium.

10. A method as claimed in claim 9, **characterized in that** said support of vegetable material is selected from jute, hemp, cotton, kenaf, Miscanthus, coconut, felt and combinations thereof.

11. A method as claimed in claim 9 or 10, wherein said support of vegetable material is in the form of strips placed on a impermeable film, preferably of polythene, situated inside a greenhouse.

12. A lawn obtained with the method according to any one of the claims 9-11.

13. A lawn as claimed in claim 12, **characterized by** being in the form of strips or turf sods ready to be applied on a basic substrate.
